(19) **Europäisches Patentamt**

**European Patent Office**

**Office européen des brevets**

(11) Veröffentlichungsnummer: **0 509 369 B1**

(12) **EUROPÄISCHE PATENTSCHRIFT**

(45) Veröffentlichungstag der Patentschrift: **20.09.95**

(51) Int. Cl.[6]: **C08F 6/16**, C08L 55/02

(21) Anmeldenummer: **92105964.8**

(22) Anmeldetag: **07.04.92**

(54) **Verfahren zur Aufarbeitung von stabilisierten ABS-Polymerisaten unter Rückgewinnung unumgesetzter Monomerer.**

(30) Priorität: **19.04.91 DE 4112789**

(43) Veröffentlichungstag der Anmeldung:
**21.10.92 Patentblatt 92/43**

(45) Bekanntmachung des Hinweises auf die
Patenterteilung:
**20.09.95 Patentblatt 95/38**

(84) Benannte Vertragsstaaten:
**DE ES FR GB IT**

(56) Entgegenhaltungen:
**EP-A- 0 002 860**
**EP-A- 0 224 788**
**EP-A- 0 225 510**

(73) Patentinhaber: **BAYER AG**

**D-51368 Leverkusen (DE)**

(72) Erfinder: **Eichenauer, Herbert, Dr.**
**Gustav-Heinemann-Strasse 3**
**W-4047 Dormagen (DE)**
Erfinder: **Jansen, Ulrich, Dr.**
**Stürzelberger Strasse 50**
**W-4047 Dormagen 5 (DE)**
Erfinder: **Ostarek, Ralph, Dr.**
**Halskestrasse 13**
**W-4000 Düsseldorf (DE)**
Erfinder: **Koch, Otto, Dr.**
**Folwiese 20**
**W-5000 Köln 80 (DE)**
Erfinder: **Ott, Karl-Heinz, Dr.**
**Paul-Klee-Strasse 54**
**W-5090 Leverkusen (DE)**

**Beschreibung**

ABS-Polymerisate sind elastisch-thermoplastische Produkte, die hauptsächlich aus den Monomerbausteinen Acrylnitril, Butadien und Styrol aufgebaut sind. Man unterscheidet prinzipiell zwischen ABS-Polymerisaten, die durch Emulsionspolymerisation hergestellt wurden und solchen, deren Synthese durch Massepolymerisation erfolgte (vgl. hierzu z.B. Ullmanns Enzyklopädie der technischen Chemie, 4.Auflage 1980, Band 19, Kapitel 5 und dort zitierte Literatur).

Bei der Herstellung von ABS-Polymerisaten durch Emulsionspolymerisation wird ein Monomerengemisch aus Styrol (gegebenenfalls auch $\alpha$-Methylstyrol) und Acrylnitril in Gegenwart eines in Latexform vorliegenden Polybutadiens (gegebenenfalls auch ein Co-Polymerisat aus Butadien mit z.B. Styrol oder Acrylnitril als Comonomer) copolymerisiert, wobei ein Teil des entstehenden Styrol/Acrylnitril-Copolymerisats in Form aufgepropfter Polymerketten an das Polybutadien chemisch gebunden wird.

Diesen so hergestellten Polymerisaten müssen zur Sicherstellung eines wirksamen Schutzes gegen oxidativen Abbau des Kautschuks während der Aufarbeitung aus der Latexstufe (Koagulation, Trocknung), der Compoundierung (Zusatz von Additiven, Farbstoffen u.a. unter thermoplastischen Bedingungen), der Verarbeitung (z.B. durch Spritzgießen oder Extrudieren) oder während des Gebrauchs der Fertigteile (z.B. in thermisch belasteten Teilen) Stabilisatoren zugesetzt werden. (vgl.EP-A-224 788 und EP-A-225 510)

Um die volle Wirksamkeit dieser Stabilisatoren direkt bei der ersten thermischen Belastung des ABS-Polymerisats, d.h. bei der Trocknung des feuchten Polymerpulvers auszunutzen, müssen diese Stabilisatoren schon vor der Trocknung zugesetzt werden; um eine möglichst gleichmäßige Verteilung der Stabilisators zu erreichen, ist Einarbeitung in den Latex notwendig.

Da bei der im großtechnischen Maßstab durchgeführten Emulsionspolymerisation von ABS keine vollständige Umsetzung der Monomeren zu erreichen ist, andererseits jedoch im Latex verbleibende Monomere eine Verminderung der Ausbeute bedeuten und beim Verbleib im aufgearbeiteten ABS-Polymerisat zu unerwünschten Verschlechterungen der Eigenschaften (z.B. Bildung von Schlieren und sonstigen Oberflächenstörungen auf den daraus hergestellten Formteilen, Reduzierung der Wärmeformbeständigkeit) führen, muß dafür Sorge getragen werden, daß die noch vorhandenen Monomeren möglichst vollständig entfernt werden.

Dies ist z.B. durch nachträgliche Behandlung des Latex mit einem Polymerisationsinitiator (in der Regel einem Radikalbildner, wie z.B. einem Peroxid) oder durch Einwirkung von Vakuum (Abdestillation der Monomeren) möglich.

Allerdings setzen diese zur Monomerentfernung eingesetzten Methoden die Latexstabilität herab (teilweise Koagulation); ein vorher zugegebener Stabilisator kann seine Wirkung verlieren oder zusammen mit den Monomeren wieder entfernt werden. Die entfernten Monomeren können erst nach komplizierten und teuren Trenn- und Reinigungsoperationen wieder eingesetzt werden oder sie müssen aufwendig vernichtet werden; es ist nicht möglich, die unumgesetzten Monomeren aus der ABS-Polymerisation direkt in einer solchen Qualität zurückzugewinnen, daß sie direkt, ohne zusätzliche Reinigungsschritte wieder der Polymerisation zugeführt werden können.

Gegenstand der Erfindung ist ein Verfahren zur Aufarbeitung von in Emulsionsform vorliegenden, gegen oxidativen Angriff wirksam stabilisierten Polymerisaten vom ABS-Typ unter gegebenenfalls kontinuierlicher Rückgewinnung und direkter Wiederverwendung unumgesetzter Monomerer, das dadurch gekennzeichnet ist, daß man der Emulsion zur Stabilisierung gegen oxidativen Abbau der ABS-Polymerisate eine Kombination aus mindestens einem sterisch gehinderten Phenol mit einem Molekulargewicht über 300, vorzugsweise über 350, ohne Estergruppierung im Molekül als Antioxidans und mindestens einer Verbindung mit mindestens einem in Form einer Thioethergruppierung eingebautem Schwefelatom mit einem Molekulargewicht über 500, vorzugsweise über 800, ohne Estergruppierung im Molekül als Costabilisator zufügt, anschließend die Monomeren aus der Emulsion oder einem Gemisch aus Emulsion und koaguliertem, aufgeschlämmten Polymerisat oder vollständig koaguliertem, aufgeschlämmten Polymerisat abtrennt, das danach verbleibende, von unumgesetzten Monomeren befreite stabilisierte ABS-Polymerisat einer üblichen Aufarbeitung unterwirft und die abgetrennten Monomeren ohne weitere Behandlung erneut einer Polymerisation zuführt.

Erfindungsgemäß einsetzbare, in Emulsionsform vorliegende Polymerisate vom ABS-Typ sind solche, die durch radikalische Polymerisation von Vinylverbindungen, vorzugsweise Styrol, $\alpha$-Methylstyrol, Acrylnitril, Methacrylnitril, Methylmethacrylat oder Mischungen daraus, in Gegenwart eines in Latexform vorliegenden Kautschuks mit einer Glasübergangstemperatur $\leq 10\,^{\circ}\mathrm{C}$, vorzugsweise Polybutadien, Copolymere aus Butadien und Styrol und/oder Acrylnitril, Polybutylacrylat hergestellt werden. Dabei sind teilvernetzte teilchenförmige Kautschuke mit mittleren Teilchendurchmessern ($d_{50}$) von 50 bis 1000 nm, vorzugsweise von 80 bis 500 nm bevorzugt. Besonders bevorzugte ABS-Polymerisate entstehen durch Polymerisation einer Mischung aus Styrol und Acrylnitril, vorzugsweise im Gewichtsverhältnis 90 : 10 bis 60 : 40, in Gegenwart von Polybutadien, wobei der Polybutadiengehalt nach der Polymerisation 5 bis 90 Gew.-%, vorzugsweise 20 bis 85 Gew.-% beträgt. Derartige Polymerisate sind bekannt.

Ebenfalls erfindungsgemäß einsetzbar sind in Emulsionsform vorliegende Mischungen der oben beschriebenen Polymerisate vom ABS-Typ mit Polymerisaten, die durch radikalische Polymerisation von Styrol, $\alpha$-Methylsytrol, Acrylnitril, Methacrylnitril, Methylmethacrylat oder Mischungen daraus erhalten wurden. Bevorzugte derartige Polymerisate sind in Latexform vorliegende Copolymerisate aus Styrol und Acrylnitril bzw. aus $\alpha$-Methylstyrol und Acrylnitril, besonders bevorzugt aufgebaut aus 90 - 60 Gew.-% Styrol oder $\alpha$-Methylstyrol und 10 -40 Gew.-% Acrylnitril.

Die in Emulsionsform vorliegenden Polymerisate bzw. Polymerisatmischungen können in bekannter Weise durch Emulsionspolymerisation in wässrigen Medien hergestellt werden. Dazu können die Monomeren bei pH-Werten von ca. 12 bis 2, insbesondere von 10 bis 4, radikalisch unter Zuhilfenahme von Emulgatoren in wäßrigem Medium polymerisiert werden. Als Initiatoren kommen insbesondere wasserlösliche Radikalbildner wie Peroxodisulfate, Peroxodiphosphate, wasserlösliche Hydroperoxide und Peroxosäuren in Betracht, Redox-Initiatorsysteme sind ebenfalls geeignet. Die Polymerisation, die normalerweise bei 40° - 90°C durchgeführt wird, erfordert die Anwesenheit eines ionischen Emulgators, insbesondere eines anionischen Emulgators, in Mengen bis zu 4 Gew.-%, bevorzugt bis zu 2,5 Gew.-%, bezogen auf die Monomeren.

Geeignete Emulgatoren sind beispielsweise Fettsäuresalze (z.B. Kaliumoleat), Alkylsulfonsäuresalze mit längerkettigen Alkylresten, Schwefelsäurealkylhalbester mit längerkettigen Alkylresten sowie bevorzugt Alkalisalze der disproportionierten Abietinsäure.

Die so hergestellten Polymeremulsionen weisen im allgemeinen Polymerfeststoffgehalte von 10 bis 70 Gew.-%, vorzugsweise von 25 bis 50 Gew.-% auf. Der Anteil an nicht polymerisierten Monomeren im Latex beträgt in der Regel 0,2 bis 10 Gew.-%, vorzugsweise 0,3 bis 5 Gew.-% und besonders bevorzugt 0,3 bis 3 Gew.-% (bezogen auf Polymerfeststoff im Latex).

Erfindungsgemäß geeignete Stabilisatoren sind sterisch gehinderte Phenole mit Molekulargewichten über 300, vorzugsweise über 350, die keine Estergruppierung im Molekül enthalten.

Beispiel für geeignete sterisch gehinderte Phenole sind 2,2'-Methylen-bis(4-methyl-6-tert.-butylphenol), 2,2'-Methylen-bis(4-ethyl-6-tert.-butylphenol),

4,4'-Butyliden-bis(3-methyl-6-tert.-butylphenol),

2,2'-Methylen-bis(4-methyl-6-cyclohexylphenol),

Di-(3-tert.-butyl-4-hydroxy-5-methylphenyl)-dicylopentadien,

Tris(2-methyl-4-hydroxy-5-tert.-butylphenyl)butan,

4,4'-Thio-bis(6-tert.-butyl-3-methylphenol),

2,4-Bis(n-octylthio)-6-(4-hydroxy-3,5-di-tert.-butylanilino)-1,3,5-triazin.

Bevorzugte Verbindungen sind 2,2'-Methylen-bis(4-methyl-6-tert.-butylphenol) und 2,2'-Methylen-bis(4-methyl-6-cyclohexylphenol). Geeignete Costabilisatoren, die in Kombination mit den sterisch gehinderten Phenolen eingesetzt werden, sind Verbindungen mit mindestens einem in Form einer Thioethergruppierung eingebauten Schwefelatom mit Molekulargewichten über 500, vorzugsweise über 800, die keine Estergruppierung im Molekül enthalten.

Beispiele dafür sind Additionsprodukte langkettiger Mercaptane an Monoolefine, Diolefine, Monovinylaromaten oder Divinylaromaten oder schwefelhaltige Verbindungen, die durch Umsetzung von Monomeren mit Mercaptanen unter Polymerisationsbedingungen erhalten wurden (vgl. DE-OS 3 505 747). Bevorzugte schwefelhaltige Costabilisatoren sind die gemäß DE-OS 3 505 747 hergestellten Verbindungen.

Die Stabilisatorkomponenten können in die Polymeremulsion vorzugsweise durch Voremulgieren der Komponenten und anschließendes intensives Vermischen mit der zu stabilisierenden ABS-Emulsion eingebracht werden.

Die Monomeren können durch Destillation, vorzugsweise bei Temperaturen von 50°C bis 120°C abgetrennt werden und zwar aus dem Latex, einem Gemisch aus Latex und koaguliertem aufgeschlämmtem Polymerisat oder dem vollständig koaguliertem aufgeschlämmtem Polymerisat. Oft koaguliert der Latex bei der Behandlung mit Wasserdampf teilweise, so daß dann ein entsprechendes Gemisch vorliegt. Bevorzugt werden die Monomeren gemäß DE-OS 2 909 518 entfernt.

Die so zurückgewonnenen Monomeren, die zunächst im Gemisch mit Wasser anfallen, können erfindungsgemäß, ohne notwendige weitere Behandlung zur Entfernung von die Polymerisation störenden Nebenbestandteilen wieder für die Polymerisation eingesetzt werden.

Man kann sowohl das anfallende Monomer/Wasser-Gemisch direkt verwenden, als auch zunächst organische Monomere und wäßrige Phase voneinander trennen.

Auch die wäßrige Phase, die gegebenenfalls in Wasser lösliche Monomere, wie z.B. Acrylnitril enthält, kann erneut einem Polymerisationsprozeß zugeführt werden. Dadurch ist es möglich, die sonst für eine Emulsionspolymerisation notwendige Frischwassermenge zu reduzieren bzw. Frischwasser einzusparen. Auch wird so eine sonst notwendige Entsorgung von monomerbelastetem Wasser bzw. eine abwassertechnische Aufarbeitung unnötig. Um eine aufwendige Trocknung der zurückgewonnenen Monomere zu vermeiden, werden sie vorzugsweise in wäßrigen Emulsionspolymerisationen eingesetzt, besonders bevorzugt bei einer erneuten Herstellung von ABS-Polymerisaten.

Die Rückgewinnung der Monomere bzw. des Monomer/Wasser-Gemisches sowie der erneute Einsatz in einer Polymerisationsreaktion erfolgt vorzugsweise kontinuierlich, sie kann jedoch auch chargenweise durchgeführt werden.

Der Anteil der in den erneuten Polymerisationsreaktionen eingesetzten zurückgewonnenen Monomeren beträgt 0,1 bis 50 Gew.-%, bevorzugt 0,25 bis 25 Gew.-% und besonders bevorzugt 0,5 bis 10 Gew.-% (jeweils bezogen auf gesamte in der Polymerisation eingesetzte Monomermenge).

Die von unumgesetzten Monomeren befreiten ABS-Polymerisate können nach üblichen Verfahren aufgearbeitet werden. So kann beispielsweise das nach Koagulation vorliegende Gemisch aus Wasser und darin aufgeschlämmten Polymerisat durch Filtration oder Zentrifugation aufgetrennt werden, wonach das feuchte ABS-Polymerisat durch bekannte Verfahren getrocknet wird.

Die erfindungsgemäß aufgearbeiteten ABS-Polymerisate besitzen eine ausgezeichnete Stabilität gegen oxidativen Abbau bei thermischer Belastung. Sie können ohne Beeinträchtigung der Eigenschaften, insbesondere ohne unerwünschte Verfärbungen, unter thermischer Belastung getrocknet, unter thermoplastischen Bedingungen in der Hitze mit Additiven oder anderen Polymeren vermischt und thermoplastisch verarbeitet werden.

Weiterhin besitzen die erfindungsgemäß aufgearbeiteten ABS-Polymerisate sehr geringe Restmonomergehalte. Die erfindungsgemäß aufgearbeiteten ABS-Polymerisate können als Reinsubstanzen verarbeitet werden, üblicherweise wird jedoch eine Compoundierstufe zwischengeschaltet, bei der Verarbeitungshilfsstoffe (z.B. Gleitmittel, Formtrennmittel), sonstige Additive (z.B. Lichtschutzmittel, Flammschutzmittel, Füllstoffe) oder sonstige Polymerkomponenten (z.B. Styrol/Acrylnitril-Copolymerisate, $\alpha$-Methylstyrol/Acrylnitril-Copolymerisate, Polycarbonate wie z.B. auf Bisphenol A-Basis, Polyester wie z.B. Polyethylenterephthalat oder Polybutylenterephthalat, Polyamide wie z.B. Polyamid 6 oder Polyamid 66, Polyvinylchlorid, zugemischt werden können, Geeignete Verarbeitungsmaschinen sind z.B. Spritzgußmaschinen, Extruder oder Blasformmaschinen.

Beispiele

Eingesetzte Materialien

A) Latex eines ABS-Polymerisats, hergestellt durch radikalische Emulsionspolymerisation von 50 Gew.-Teilen eines Monomerengemisches aus 72 Gew.-% Styrol und 28 Gew.-% Acrylnitril in Gegenwart von 50 Gew.-Teilen eines in Latexform vorliegenden Polybutadiens mit einem mittleren Teilchendurchmesser ($d_{50}$) von 400 nm unter Verwendung des Natriumsalzes der disproportionierten Abietinsäure als Emulgator, Feststoffgehalt 32,5 Gew.-%, Restmonomergehalt 1,2 Gew.-%.

B) Latexgemisch aus 25 Gew.-% des unter (A) beschriebenen Latex und 75 Gew.-% eines Latex eines durch radikalische Emulsionspolymerisation von 70 Gew.-Teilen $\alpha$-Methylstyrol und 30 Gew.-Teilen Acrylnitril unter Verwendung des Natriumsalzes von $C_9$-$C_{18}$-Alkylsulfonsäuren als Emulgator hergestellten Copolymerisats mit einem Feststoffgehalt von 31,8 Gew.-% und einem Restmonomergehalt von 1,8 Gew.-%.

C) 2,2'-Methylen-bis(4-methyl-6-cyclohexylphenol) Vulkanox® ZKF der Bayer AG) als phenolisches Antioxidans.

D) 2,2'-Methylen-bis(4-methyl-6-tert.-butylphenol) Vulkanox® BKF der Bayer AG) als phenolisches Antioxidans.

E) 2,6-Di-tert.-butyl-4-methylphenol (Vulkanox® KB der Bayer AG) als phenolisches Antioxidans.

F) Octadecyl-3-(3,5-di-tert.-butyl-4-hydroxyphenyl)-propionat (Irganox® 1076 der Ciba Geigy) als phenolisches Antioxidans.

G) Durch radikalische Emulsionspolymerisation von 61,2 Gew.-Teilen Styrol, 23,8 Gew.-Teilen Acrylnitril und 15 Gew.-Teilen tert.-Dodecylmercaptan gemäß DE-OS 3 505 747, Beispiel 1, hergestelltes, in Latexform vorliegendes Produkt als schwefelhaltiger Costabilisator.

H) Dilaurylthiodipropionat (Irganox PS 800 der Ciba Geigy) als schwefelhaltiger Costabilisator.

4

Durchführung der Versuche

I) Allgemeine Vorschrift für die Herstellung einer Stabilisator-haltigen wäßrigen Emulsion

50 Gew.-Teile Stabilisator (C, D, E, F oder H) werden zusammen mit 15 Gew.-Teilen des Natriumsalzes der disproportionierten Abietinsäure aufgeschmolzen und unter kräftigem Rühren langsam zu 60 Gew.-Teilen 80°C warmem Wasser gegeben. Nach 2 Minuten weiterem kräftigem Rühren ist eine gleichmäßige Verteilung des Stabilisators erreicht, die resultierende Emulsion mit einem Wirkstoffgehalt von 40 Gew.-% wird direkt in den zu stabilisierenden ABS-Latex eingerührt.

II) Allgemeine Vorschrift für die Monomerabtrennung aus dem Stabilisierten ABS-Latex und die Aufarbeitung des ABS-Polymerisats

Der unter (A) bzw. (B) beschriebene Latex wird mit den in Tabelle 1 angegebenen Mengen an Stabilisator versetzt und zur gleichmäßigen Verteilung der Stabilisatoremulsion 2 h lang bei Raumtemperatur gerührt. Dann werden 300 Gew.-Teile Latex unter intensivem Rühren zu 500 Gew.-Teilen einer 99° bis 100°C heißen wässrigen, mit Essigsäure auf einen pH-Wert von 2,5-3 eingestellten, 2 %igen Magnesiumsulfat-Lösung gegeben, wobei während und nach dem Koagulationsprozeß ein Gemisch aus Monomer und Wasser abdestilliert wird. Die danach vorliegende ABS-Aufschlämmung wird filtriert, wonach das Polymerisat mit Wasser gewaschen und danach im Vakuum getrocknet wird.

III) Vorschrift zur Durchführung einer Modellreaktion 1 zur Beurteilung des Polymerisationsverhaltens der während der Aufarbeitung abgetrennten Monomeren

Ein Gemisch aus 5,4 Gew.-Teilen Styrol, 2,1 Gew.-Teilen Acrylnitril und 0,15 Gew.-Teilen des Natriumsalzes der disproportionierten Abietinsäure wird unter Rühren zusammen in 81,8 Gew.-Teilen Wasser dispergiert, auf 65°C erwärmt und mit 0,15 Gew.-Teilen Kaliumpersulfat (gelöst in 13,2 Gew.-Teilen Wasser) versetzt. Nach 30-minütigem Rühren bei dieser Temperatur wird zu der Reaktionsmischung innerhalb 4 Stunden ein Gemisch aus 66,6 Gew.-Teilen Styrol und 25,9 Gew.-Teilen Acrylnitril und über einen separaten Zulauf eine Lösung von 1,85 Gew.-Teilen des Natriumsalzes der disproportionierten Abietinsäure in 25 Gew.-Teilen Wasser zudosiert. Nach einer Nachreaktionszeit von 2 h bei 65°C wird der Umsatz der Monomerenmischung durch Messung der gebildeten Polymermenge ermittelt.

Zur Beurteilung der Polymerisierbarkeit der gemäß (II) abgetrennten Monomeren bzw. zur Ermittlung der Beeinfludssung der Polymerisationsreaktion durch diese abgetrennten Monomeren wurden entweder 5 % oder 10 % der obengenannten Styrolmengen durch abgetrenntes Monomer ersetzt.

IV) Vorschrift zur Durchführung einer Modellreaktion 2 zur Beurteilung des Polymerisationsverhaltens der während der Aufarbeitung abgetrennten Monomeren

Ein Gemisch aus 2,7 Gew.-Teilen Styrol, 1,05 Gew.-Teilen Acrylnitril und 0,15 Gew.-Teilen des Natriumsalzes der disproportionierten Abietinsäure werden zusammen mit 102 Gew.-Teilen eines Polybutadienlatex (Feststoffgehalt 49,2 Gew.-%, mittlerer Teilchendurchmesser ($d_{50}$) der Polybutadienteilchen 0,4 $\mu$m) und 100 Gew.-Teilen Wasser vermischt, unter Rühren auf 65°C erwärmt und mit 0,15 Gew.-Teilen Kaliumpersulfat (gelöst in 19,8 Gew.-Teilen Wasser) versetzt. Nach 30-minütigem Rühren bei dieser Temperatur wird zu der Reaktionsmischung innerhalb 4 Stunden ein Gemisch aus 33,3 Gew.-Teilen Styrol und 12,95 Gew.-Teilen Acrylnitril und über einen separaten Zulauf eine Lösung von 1,85 Gew.-Teilen des Natriumsalzes der disproportionierten Abietinsäure in 25 Gew.-Teilen Wasser zudosiert. Nach einer Reaktionszeit von 2 h bei 65°C wird der Umsatz der Monomerenmischung durch Messung der gebildeten Polymermenge ermittelt.

Zur Beurteilung der Polymerisierbarkeit der gemäß (II) abgetrennten Monomeren bzw. zur Ermittlung der Beeinflussung der Polymerisationsreaktion durch diese abgetrennten Monomeren wurden entweder 5 % oder 10 % der obengenannten Styrolmengen durch abgetrenntes Monomer ersetzt.

V) Beurteilung der Stabilität des gemäß (II) aufgearbeiteten ABS-Polymerisats

Das nach der Trocknung resultierende Polymerpulver wurde bei 200°C unter Umgebungsatmosphäre (Luft) 10 min lang erhitzt, wonach eine visuelle Beurteilung des Pulvers erfolgte. Die Beurteilung des Pulvers erfolgte nach folgender Scala:

1 = keine Veränderung
2 = leichte Gelbverfärbung
3 = starke Gelbverfärbung

Die durchgeführten Versuche sowie die resultierenden Ergebnisse sind in Tabelle 1 zusammengestellt.

Tabelle 1

| Beispiel | Eingesetztes ABS-Polymerisat | Phenolisches*) Antioxidans (Gew.-Teile pro 100 Gew.-Teile ABS) | Schwefelhaltiger**) Costabilisator (Gew.-Teile pro 100 Gew.-Teile ABS) | Einsatzmenge zurückgewonnenes Monomer in Modellreaktion gem. III oder IV | Resultierender Umsatz in Modellreaktion III oder IV | Stabilität des ABS-Polymerisats |
|---|---|---|---|---|---|---|
| 1 | A | C (1) | G (3) | 5 % (III) | 99,5 | 1 |
| 2 | A | C (1) | G (3) | 10 % (III) | 99,3 | 1 |
| 3 | A | C (1) | G (3) | 5 % (IV) | 99,3 | 1 |
| 4 | A | D (0,87) | G (3) | 10 % (III) | 99,1 | 1 |
| 5 | B | D (0,87) | G (3) | 5 % (IV) | 98,8 | 1 |
| 6 | B | C (1) | G (3) | 10 % (III) | 98,5 | 1 |
| 7 | B | C (1) | G (3) | 5 % (IV) | 99,0 | 1 |
| 8 (Vergleich) | A | E (1,12) | G (3) | 5 % (III) | keine Reaktion | 2 |
| 9 (Vergleich) | A | E (1,12) | G (3) | 10 % (III) | keine Reaktion | 2 |
| 10 (Vergleich) | A | F (2,7) | G (3) | 10 % (III) | 93,5 | 1 |
| 11 (Vergleich) | A | C (1) | H (1,15) | 10 % (III) | 94,6 | 2 |
| 12 (Vergleich) | A | E (1,12) | H (1,15) | 10 % (III) | keine Reaktion | 3 |
| 13 (Vergleich) | B | R (1,12) | H (1,15) | 5 % (IV) | 15,3 | 3 |

*) Der Gehalt an Wirkgruppen (sterisch gehinderte OH-Gruppen) wurde konstant gehalten.
**) Der Gehalt an Wirkgruppen ( -S-Gruppen) wurde konstant gehalten.

Daraus ist deutlich zu erkennen, daß nur bei Anwendung des erfindungsgemäßen Verfahrens bzw. bei Verwendung der speziellen Stabilisatorkombinationen bei Anwendung dieses Verfahrens gleichzeitig gute stabilisierte ABS-Polymerisate und daraus zurückgewonnene unumgesetzte Monomere mit sehr gutem Polymerisationsverhalten resultieren.

**Patentansprüche**

1. Verfahren zur Aufarbeitung von in Emulsionsform vorliegenden, gegen oxidativen Angriff wirksam stabilisierten Polymerisaten vom ABS-Typ unter gegebenenfalls kontinuierlicher Rückgewinnung und direkter Wiederverwendung unumgesetzter Monomerer, dadurch gekennzeichnet, daß man der Emulsion zur Stabilisierung gegen oxidativen Abbau der ABS-Polymerisate eine Kombination aus mindestens einem sterisch gehinderten Phenol mit einem Molekulargewicht über 300 ohne Estergruppierung im Molekül als Antioxidans und mindestens einer Verbindung mit mindestens einem in Form einer Thioethergruppierung eingebautem Schwefelatom mit einem Molekulargewicht über 500 ohne Estergruppierung im Molekül als Costabilisator zufügt, anschließend die Monomeren aus der Emulsion oder einem Gemisch aus Emulsion und koaguliertem, aufgeschlämmtem Polymerisat oder vollständig koaguliertem, aufgeschlämmtem Polymerisat abtrennt, das danach verbleibende von unumgesetzten Monomeren befreite stabilisierte ABS-Polymerisat einer üblichen Aufarbeitung unterwirft und die abgetrennten Monomeren ohne weitere Behandlung erneut einer Polymerisation zuführt.

**Claims**

1. A process for working up polymers of the ABS type present in emulsion form and effectively stabilized against oxidative attack with optionally continuous recovery and direct reuse of unreacted monomers, characterized in that a combination of at least one sterically hindered phenol having a molecular weight above 300 and no ester group in the molecule as antioxidant and at least one compound containing at least one sulfur atom incorporated in the form of a thioether group and having a molecular weight above 500 with no ester group in the molecule as co-stabilizer is added to the emulsion to stabilize the ABS polymers against oxidative degradation, the monomers are subsequently removed from the emulsion or from a mixture of emulsion and coagulated, suspended polymer or from completely coagulated suspended polymer, the remaining stabilized ABS polymer freed from unreacted monomers is subjected to working up in the usual way and the monomers removed are directly used without any further treatment in another polymerization process.

**Revendications**

1. Procédé pour traiter des polymères du type ABS à l'état d'émulsion, stabilisés efficacement contre les attaques par oxydation, avec récupération éventuellement continue et réutilisation directe des monomères non convertis, caractérisé en ce que l'on ajoute à l'émulsion, pour stabiliser le polymère ABS contre les dégradations par oxydation, une combinaison d'au moins un phénol faisant l'objet d'un empêchement stérique, de poids moléculaire supérieur à 300 et exempt de groupes esters dans la molécule, qui sert d'agent antioxydant, et au moins un composé à au moins un atome de soufre combiné sous forme d'un groupement thioéther, de poids moléculaire supérieur à 500 et exempt de groupement ester dans la molécule, en tant que stabilisant auxiliaire, on sépare ensuite les monomères de l'émulsion ou d'un mélange de l'émulsion et du polymère coagulé en dispersion ou du polymère entièrement coagulé en dispersion, on soumet le polymère ABS restant, stabilisé et débarrassé des monomères non convertis, à des opérations usuelles d'isolement et on renvoie les monomères séparés, sans autre traitement particulier, à la polymérisation.